# FASCICULE DE BREVET EUROPEEN

(11) **EP 2 453 264 B1**
(45) Date de publication et mention de la délivrance du brevet: **01.09.2021**
(21) Numéro de dépôt: 10368043.5
(22) Date de dépôt: 26.11.2010
(51) Int. Cl.: G01V 15/00, F16L 1/11

(54) **Tube polymère comportant un capteur d'identification, ainsi que son procédé de fabrication**
Polymer-Rohr mit einem Identifizierungssensor, sowie entsprechendes Fertigungsverfahren
Polymer tube comprising an identification sensor and method for manufacturing same

(30) Priorité: 10.11.2010 EP 10290603
(43) Date de publication de la demande: 16.05.2012
(73) Titulaire: ELYDAN, 38590 Saint-Étienne-de-Saint-Geoirs (FR)
(72) Inventeur: Vinoy, Bernard, 38590 Saint-Etienne-de-Saint-Geoirs (FR)
(74) Mandataire: Schuffenecker, Thierry

(56) Documents cités:
- WO-A1-2009/118505
- DE-A1-102008 055 917
- GB-A- 2 457 384
- US-A- 5 173 139
- US-A- 5 532 598
- US-A1- 2007 057 769
- US-B1- 6 271 667
- None

## Description

### Domaine technique de l'invention

La présente invention concerne le domaine des tubes non métalliques, servant à réaliser des canalisations enfouies, et notamment une canalisation polymère dotée d'un capteur d'identification ainsi que son procédé de fabrication

### Etat de la technique

Les polymères (PolyEthylène PE, PolyPropylène PP, PVC, PRV etc...) sont des matériaux très utilisés pour la réalisation de canalisations souterraines, permettant notamment la distribution de l'eau ,du gaz, de l'electricité, des telécommunications.

A cet égard, les polymères tendent à devenir des concurrents actifs de la fonte, lequel est aujourd'hui encore le matériau principalement utilisé pour la distribution de l'eau.

Malgré les multiples avantages que représente un réseau polymère et notamment le polyéthylène face à la fonte (réseau soudé, auto-butée, flexible, s'adaptant aux mouvements du sol, ne se corrodant pas....), il subsiste un frein à son usage généralisé : la localisation après installation. En effet, les techniques d'identification utilisent les caractéristiques électromagnétiques des matériaux ferreux.

Les polymères y sont insensibles et ne permettent donc pas d'envisager une identification. D'une manière générale, par nature, les canalisations plastiques sont inertes et difficilement détectables une fois enfouies. Seuls les relevés topographiques permettent de les situer. Mais l'environnement urbain évolue, rendant difficile une vision précise et exhaustive du sous-sol. Ainsi, chaque année, plusieurs milliers de canalisations sont arrachées accidentellement, avec des conséquences pouvant être importantes.

La présente demande de brevet a pour objet de remédier à ce problème.

La demande de brevet US 2007/057769 A1 décrit une méthode de localisation de canalisations utilisant la technique RFID.

La demande de brevet WO 2009/118505 A1 décrit une méthode de fabrication d'une cable doté d'une étiquette.

La demande de brevet GB 2 457 384 A décrit un dispositif réfléchissant résonant polarisé utilisé à des fins d'identification d'un article.

La demande de brevet US 5 173 139 A décrit un procédé générant des marqueurs magnétiques sur des objets longs cachés.

La demande de brevet US 6 271 667 B1 décrit l'utilisation d'un marqueur électronique destiné à des clôtures enfouies.

La demande de brevet DE 10 2008 055917 A1 décrit l'utilisation d'une puce RFID pour la localisation d'une canalisation.

La demande de brevet US 5 532 598 A décrit un système d'étiquetage par métal amorphe pour des éléments structurels enterrés.

### Exposé de l'invention

La présente invention a pour but de proposer un tube polymère susceptible d'être enfoui à une profondeur d'environ deux mètres et permettant une localisation et plus généralement une communication avec un dispositif de communication en surface.

C'est un autre but de la présente invention que de réaliser une canalisation polymère dotée d'une fonction auto-diagnostique, interrogeable à distance

C'est un troisième but de la présente invention que de réaliser une canalisation polymère détectable depuis la surface, postérieurement à son enfouissement, permettant une localisation et une traçabilité depuis la surface.

C'est un autre but de la présente invention que de fournir un procédé de fabrication d'un tel tube polymère.

L'invention réalise ces buts au moyen d'un tube polymère destiné à la réalisation d'une canalisation enfouie sous terre tel que défini dans la revendication 1, ledit tube comportant :
- une multitude de radio-étiquettes RFID disposées à intervalles régulier le long du tube ;
- optionnellement une couche de protection desdites radio-étiquettes.

Le tube est caractérisé en ce que les étiquettes RFID comportent un circuit résonant présentant une valeur capacitive suffisante à rendre négligeable les capacités parasites présentes dépendantes de la permittivité du milieu , notamment lorsque le milieu est humide.

De préférence, le tube polymère comporte des radio-étiquettes RFID disposées sur un ruban s'enroulant autour du tube ou selon les méthodes décrites dans les modes de réalisation.

Dans un mode de réalisation particulier, les radio-étiquettes sont disposées sur une feuille de polymère avant soudage par ses extrémités, sur le tube.

Alternativement les radio-étiquettes sont disposées sur une bande continue collée sur une génératrice du tube.

Alternativement, les radio-étiquettes sont directement collées après pré-formage éventuel.

Dans un mode de réalisation particulier, la couche de protection est en polypropylène destinée à protéger les radio-étiquettes lors du conditionnement du tube et des manipulations avant et lors de la pose.

Dans un mode de réalisation particulier, le tube comporte des moyens de communication de l'identité, des caractéristiques de fabrication du tube, et de la localisation du tube et des informations complémentaires suivant le souhait des exploitants dans la limite des possibilités de stockage des données.

L'invention a également pour objet un procédé de procédé de fabrication d'un tube de polymère destiné à la réalisation d'une canalisation enfouie sous terre tel que défini dans la revendication 9 ; ledit procédé comportant les étapes :
- mise à disposition d'un tube polymère ;
- mise à disposition d'un ruban comportant une série de radio-étiquettes ayant chacune un axe longitudinal suivant un angle α par rapport à l'axe dudit ruban, lesdites étiquettes RFID comportant un circuit résonant présentant une valeur capacitive suffisante à rendre négligeable les capacités parasites présentes dépendantes de la permittivité du milieu , notamment lorsque le milieu est humide ;
- enroulement dudit ruban autour du tube polymère suivant un angle égal audit angle α de manière à faire coïncider les axes longitudinaux des radio-étiquettes et l'axe du tube ;
- optionnellement recouvrement d'une couche de protection.

L'invention a également pour objet un procédé de procédé de fabrication d'un tube de polymère destiné à la réalisation d'une canalisation enfouie sous terre tel que défini dans la revendication 10 ; ledit procédé comportant les étapes :
- mise à disposition d'un tube polymère ;
- mise à disposition d'une feuille de polymère comportant à intervalle régulier des radio-étiquettes, lesdites étiquettes comportant un circuit résonant présentant une valeur capacitive suffisante à rendre négligeable les capacités parasites présentes dépendantes de la permittivité du milieu , notamment lorsque le milieu est humide ;
- recouvrement du tube par ladite feuille de polymère de manière à en faire coincider les extrémités ;
- soudage des extrémités.
- optionnellement recouvrement d'une couche de protection.

L'invention a également pour objet un procédé de procédé de fabrication d'un tube de polymère destiné à la réalisation d'une canalisation enfouie sous terre tel que défini dans la revendication 11 ; ledit procédé comportant les étapes :
- mise à disposition d'un tube polymère ;
- mise à disposition d'une bande continue comportant à intervalle régulier des radio-étiquettes, lesdites étiquettes comportant un circuit résonant présentant une valeur capacitive suffisante à rendre négligeable les capacités parasites présentes dépendantes de la permittivité du milieu , notamment lorsque le milieu est humide ;
- collage de la bande ;
- optionnellement recouvrement d'une couche de protection.

L'invention a également pour objet un procédé de procédé de fabrication d'un tube de polymère destiné à la réalisation d'une canalisation enfouie sous terre tel que défini dans la revendication 12; ledit procédé comportant les étapes :
- mise à disposition d'un tube polymère ;
- préformage de radio-étiquette de manière à ce que sa forme coincide avec le rayon de courbure du tube, lesdites étiquettes comportant un circuit résonant présentant une valeur capacitive suffisante à rendre négligeable les capacités parasites présentes dépendantes de la permittivité du milieu , notamment lorsque le milieu est humide ;
- collage direct sur une génératrice du tube ;
- optionnellement recouvrement d'une couche de protection.

L'invention a également pour objet un boîtier tel que défini dans la revendication 16.

Dans un mode de réalisation particulier, la couche de protection est en polymère.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un mode de réalisation de canalisation conforme à la présente invention, comportant un ensemble de capteurs RFID sur sa longueur.
La figure 2 représente un ruban comportant une disposition d'antennes RFID orientées suivant un angle spécifique α avant son enrubannement sur un tube de polymère.
La figure 3 illustre un premier procédé de fabrication d'un tube polymère comportant des détecteurs RFID basé sur le ruban de la figure 2.
Les figures 4, 5 et 6 illustrent respectivement un second, un troisième et un quatrième procédé de fabrication.
La figure 7 illustre l'architecture générale d'une antenne inductive haute-fréquence pouvant servir à la réalisation d'une radio-étiquette disposée sur le tube polymère.
La figure 8 est une vue en perspective d'une antenne utilisable pour une radio-étiquette disposée sur le tube polymère
La figure 9 est une vue en coupe selon le plan V de la figure 8 ;
La figure 10 est une vue en coupe schématique d'un premier type de sous-ensemble d'une antenne propre à servir à la réalisation d'une radio-étiquette pur un tube polymère.
La figure 10A représente le schéma électrique équivalent du sous-ensemble de la figure 10 ;
La figure 11 est une vue en coupe schématique d'un deuxième type de sous-ensemble d'une antenne propre à servir à la réalisation d'une radio-étiquette pur un tube polymère.
La figure 11A représente le schéma électrique équivalent du sous-ensemble de la figure 11 ; et
La figure 12a illustre un autre mode de réalisation d'une radio-étiquette, logée dans un boîtier autonome, pouvant être fixée par serrage.
La figure 12b illustre un autre mode de réalisation d'une radio-étiquette, logée dans un boîtier autonome, pouvant être fixée par soudage.
La figure 12c illustre un autre mode de réalisation d'une radio-étiquette, logée dans un boîtier autonome, pouvant être fixée par clipsage.

### Description d'un mode de réalisation préféré

L'on va considérer à présent un mode de réalisation particulier de l'invention destiné à la réalisation d'une conduite ou canalisation destinée à être enfouie sous terre. On considère typiquement l'exemple d'un tube PEHD (Polyéthylène Haute Densité), propre à la réalisation d'une canalisation pour l'adduction d'eau potable, la distribution du gaz, l'assainissement, la protection de câble électrique et de fibre optique. L'on pourra considérer en particulier l'exemple d'un tube multicouche en polyéthylène pour conduites enterrées en pression, constitué par un tube en polyéthylène à haute densité PE 80 ou PE 100 répondant à la norme EN1555.

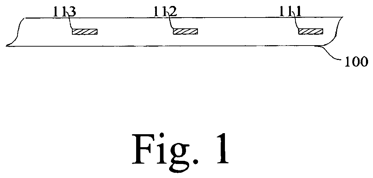

De manière à permettre la détection de la canalisation, son identification et même l'échange d'informations avec cette dernière, l'on équipe le tube 100 d'une série de marqueurs ou radio-étiquettes *(tag)* de type RFID (*Radio Frequency Identification)* (RFID) disposés sur le tube, espacés à intervalles réguliers, comme cela est représenté dans la figure 1 par les références 111, 112 et 113. Ces radio-étiquettes ou « tags » comportent chacune un transpondeur ayant une antenne associée à une puce électronique permettant d'émettre et de recevoir des informations avec un lecteur situé en surface.

D'une manière générale, comme cela est connu d'un homme du métier, le lecteur comporte une antenne résonante inductive qui est généralement représentée par un circuit résonant série constitué d'une résistance r, d'un condensateur C1 et d'un élément inductif L1 ou antenne, le circuit étant excité par une générateur HF approprié de manière à générer une porteuse haute fréquence modulée (en amplitude et/ou en phase) pour transmettre des informations au transpondeur.

Le transpondeur situé dans la radio-étiquette fixée sur le tube comporte, de son côté, un circuit résonant, parallèle ou série, doté d'un élément inductif ou antenne L2 en parallèle avec un condensateur C2 et une charge R représentant les circuits électroniques du transpondeur. Ce circuit résonant capte le flux du champ magnétique haute fréquence produit par la station de base, lorsqu'il se trouve soumis à ce champ. D'une manière générale, la puce électronique incorpore le condensateur C2 du circuit oscillant. Le flux est en général suffisamment pour assurer l'alimentation électrique du transpondeur en sorte que ce dernier devient complètement autonome.

La canalisation polymère devient alors parfaitement communicante alors même qu'elle se trouve enfouie sous terre.

Dans un mode de réalisation particulier, afin de permettre un échange d'informations même lorsque la canalisation se trouve enfouie dans une grande profondeur - jusqu'à deux mètres - l'on utilise des tags RFID spécifiques parfaitement adaptés à la présence d'un environnement humide, et qui seront décrits plus avant ci-après.

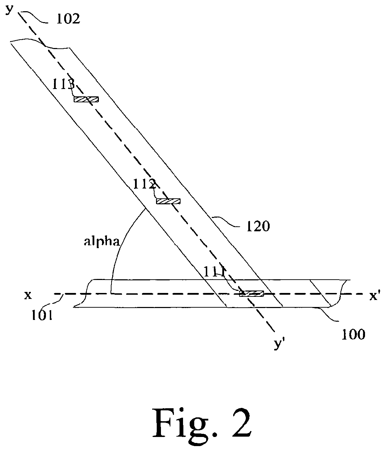

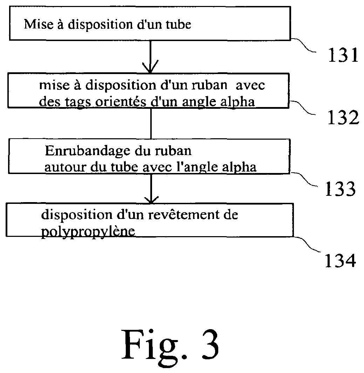

En référence aux figures 2 et 3, l'on décrit d'abord un premier mode de réalisation d'un procédé de fabrication d'un tube communicant conforme à la présente invention.

Le procédé de fabrication démarre par une première étape 131 qui comporte la mise à disposition d'un tube PEHD, tel que représenté par le tube 110 de la figure 3. Le tube 10 comporte un axe x-x' référencé 101.

Puis, dans une seconde étape 132, l'on vient mettre à disposition un ruban 120, par exemple en polypropylène, et comportant à intervalle régulier une série de tags RFID 111, 112 et 113.

Il est à noter que l'axe longitudinal des tags 111-112-113 fait un angle prédéterminé α avec l'axe longitudinal du ruban, représenté par l'axe y-y' référencé 102.

D'une manière concrète, la pose du ruban portant les radio-étiquettes pourra être effectuée au moyen d'une enrubanneuse conventionnelle, telle que celles que l'on connaît pour la pose d'un revêtement de feuillard en aluminium. Une enrubanneuse est bien connue d'un homme du métier, et ne sera pas détaillée plus avant ;
Puis dans une étape 133, on procède à l'enroulement du ruban autour du tube, comme cela est illustré dans la figure 3, suivant un axe égal à l'axe α mentionné précédemment.

Il en résulte alors que les tags 111, 112 et 113 seront parfaitement dans l'axe x-x' lorsque l'enrubanne ment sera finalisé.

Etant dans l'axe du tube, les tags seront alors dans une disposition optimale, assurant leur résistance aux effets mécaniques, notamment de cintrage...

Optionnellement, dans une étape 134, on procède optionnellement à la mise en place d'un revêtement ou couche protectrice, tel que par exemple une couche extérieure en polymère. Dans un mode de réalisation particulier, on dispose une couche en polypropylène destinée à éviter la détérioration de l'antenne de la radio-étiquette.

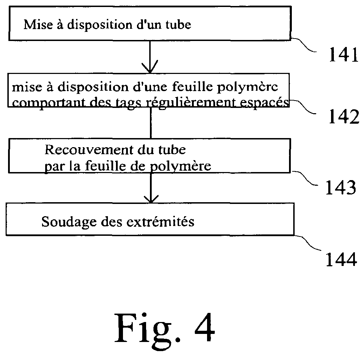

La figure 4 décrit un second mode de réalisation d'un tube comportant des tags ou radio-étiquettes alignés à intervalle régulier.

Suivant une étape 141, l'on met à disposition un tube polymère, par exemple un type en polyéthylène.

Puis, dans une étape 142, l'on vient mettre à disposition une feuille de polymère sur laquelle sont alignés, à intervalle régulier, les tags ou radio étiquettes.

Puis l'on vient recouvrir, dans une étape 143, le tube avec la feuille de polymère de manière à ce que les deux extrémités se rejoignent sur une génératrice du tube.

L'on vient ensuite fixer la feuille

D'une manière générale, l'homme du métier pourra s'inspirer des techniques connues pour permettre le recouvrement d'un tube au moyen d'une feuille d'aluminium, notamment lorsque le tube est destiné à être enfouie dans un environnement pollué ou, encore, lorsque le tube est destiné à la réalisation d'une installation sanitaire dans laquelle la couche d'aluminium apporte une stabilité de forme lors du cintrage.

Dans le mode de réalisation qui est décrit, l'on utilise, non pas une feuille d'aluminium comme cela est fait classiquement, mais une feuille de polymère sur laquelle on aura préalablement disposé, suivant un alignement régulié, les tags ou radio-étiquettes.

Le second procédé s'achève ensuite par une étape 144 au cours de laquelle l'on vient souder les deux extrémités de la feuille, notamment au moyen d'une technique à ultra-son.

Optionnellement l'on pourra, suivant une étape 145, recouvrir le tube d'une couche de protection, tel que du polypropylène.

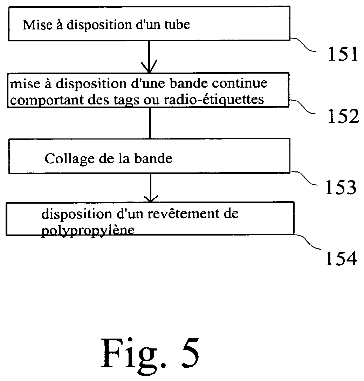

L'on décrit à présent, en relation avec la figure 5, un troisième procédé de fabrication d'un tube communiquant suivant la présente invention.

Suivant une étape 151, l'on met à disposition un tube polymère, par exemple un type en polyéthylène.

Puis, suivant une étape 152, l'on met à disposition une bande continue (dont la largeur n'est pas destinée à recouvrir intégralement la totalité de la périphérie du tube) sur laquelle sont disposés, alignés à des intervalles réguliers, des tags ou radio-étiquettes RFID.

L'on procède ensuite, suivant une étape 153, au collage de la bande continue suivant une génératrice du tube.

Optionnellement l'on pourra, suivant une étape 154, recouvrir le tube d'une couche de protection, tel que du polypropylène.

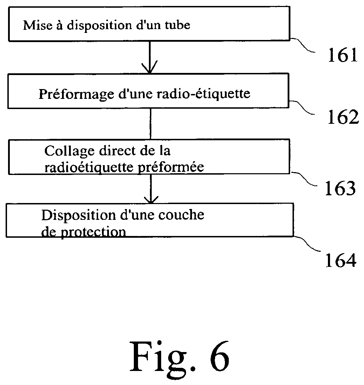

La figure 6 illustre à présent un quatrième mode de réalisation d'un procédé de fabrication d'un tube communiquant suivant la présente invention.

Suivant une étape 161, l'on met à disposition un tube polymère, par exemple un type en polyéthylène.

Puis , suivant une étape 162, l'on procède éventuellement au préformage d'un tag ou d'une radio-étiquette de manière à faire coincider sa forme avec le rayon de courbure du tube.

Puis, dans une étape 163, l'on procède à la mise en place directe, sur une génératrice du tube, de la radio-étiquette préalablement préformée suivant l'étape 162.

Puis l'on vient recouvrir, optionnellement, la radio-étiquette d'une couche de protection dans une étape 164.

L'on décrit à présent plus en détail un exemple de réalisation du transpondeur d'une radio-étiquette que l'on peut parfaitement et avantageusement combiner avec un tube polymère destinée à la réalisation d'une canalisation souterraine.

Ce transpondeur a fait l'objet d'une demande de brevet français, intitulé « Antenne pour Milieu Humide », déposée le 15 Juin 2010 par le Commissariat à l'Energie Atomique et aux Energies Alternatives (C.E.A.).

L'on relève en effet qu'un environnement humide, voire saturé en eau est rédhibitoire à une bonne communication entre le lecteur situé en surface et le transpondeur localisé au sein de la radio-étiquette.

En effet, les circuits résonants du lecteur et du transpondeur sont généralement accordés sur une même fréquence de résonance ω (L1.C1.ω² = L2.C2. ω² = 1). Quand le transpondeur est placé dans un milieu comme l'air, la permittivité électrique du milieu enrobant le transpondeur est pratiquement celle du vide (ω₀=8,854.10⁻¹² Farad par mètre, ou permittivité relative εᵣ=1). Les caractéristiques du circuit résonant du transpondeur (accord en fréquence, facteur de qualité) sont alors stables et à leur valeurs nominales.

Au contraire, dans un milieu humide, la présence d'eau modifie significativement la permittivité électrique du milieu entourant le transpondeur jusqu'à atteindre des valeurs très importantes, plusieurs dizaines, ce qui est très supérieur à la permittivité de l'air (εᵣ=1). Il en résulte alors des capacités parasites constituées entre différentes parties du circuit inductif (L2) de l'antenne du transpondeur, lesquelles viennent perturber fortement l'accord entre le lecteur et le transpondeur, détériorant significativement le facteur de qualité et de la qualité de la transmission (télé-alimentation et communication).

Pour rendre l'accord de la radio-étiquette insensible au milieu humide dans lequel elle est plongée, on prévoit une nouvelle disposition pour l'inductance du circuit oscillant présente dans le transpondeur. Plus particulièrement, on dispose une antenne se décomposant en sous-ensembles ou en paires de tronçons connectés de façon particulière entre eux pour constituer des sous-ensembles résonants ayant tous la même fréquence de résonance, chaque sous-ensemble ayant une valeur d'inductance suffisamment faible pour que l'élément capacitif participant au sous-ensemble concerné ait une valeur suffisante à rendre négligeable les capacités parasites dépendant de la permittivité du milieu humide, même avec une forte permittivité.

En réduisant la valeur de l'inductance de chacun des sous-ensembles résonants, l'on augmente la valeur capacitive du circuit résonant qui, par conséquent, devient moins sensible aux capacités parasites présentes entre les différentes parties du circuit et dépendantes de la permittivité du milieu.

Et par ailleurs, l'on maintient à une valeur acceptable le niveau de tension récupérée aux bornes de l'antenne, source d'énergie pour le fonctionnement de la puce de l'étiquette.

L'on peut ainsi, grâce à cette disposition nouvelle et inventive réduire la valeur de l'impédance sans qu'il soit nécessaire de réduire le nombre de tours des enroulements plans formant l'antenne (l'inductance variant avec le carré du nombre de tours), ni même accroître la dimension d'une antenne positionnée sur la surface concave d'un tube de polymère.

Dans un mode de réalisation simplifié, les bornes de l'antenne résonante ainsi réalisée sont connectées directement l'une à l'autre. On obtient alors un résonateur simple dont les caractéristiques de fréquence d'accord et de facteur de qualité ne sont pas perturbées par un milieu humide, un tel résonateur est susceptible de répondre à des applications de simple marquage.

Dans un mode de réalisation adapté à fonctionner avec une puce électronique, il peut être nécessaire d'intercaler un circuit d'adaptation entre l'antenne résonante inductive et cette puce électronique.

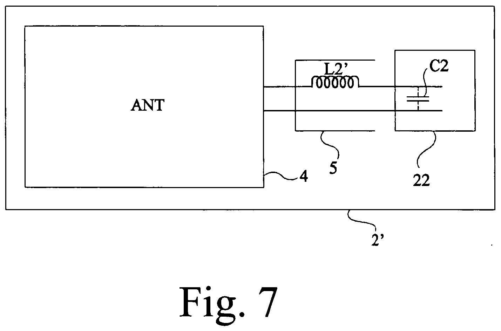

La figure 7 illustre plus particulièrement l'architecture générale d'une antenne inductive haute-fréquence pouvant servir à la réalisation d'une radio-étiquette disposée sur un tube polymère destinée à une canalisation souterraine.

Un résonateur 4 (ANT) formé de sous-ensembles résonants dont des exemples seront décrits plus loin est connecté à une puce électronique 22 par l'intermédiaire d'un circuit d'adaptation 5. Ce circuit d'adaptation est, par exemple constitué d'une inductance (par exemple un enroulement inductif plan) en série avec les enroulements du résonateur. Un élément capacitif C2 participe à l'adaptation mais peut être intégré dans la puce 22 comme cela est représenté. L'élément C2 est en parallèle sur les circuits électroniques de la puce 22. L'inductance L2' est préférentiellement de petite taille par rapport à la taille de l'antenne résonante inductive 4. L'élément inductif L2' est choisi pour que le circuit L2'C2 soit accordé sur la fréquence du champ radiofréquence, pour obtenir un effet de surtension. L'élément inductif L2', n'ayant pas besoin de récupérer une tension induite par le champ magnétique radiofréquence, sera choisi de préférence de petite taille, ainsi les perturbations apportées par le milieu humide sur les caractéristiques de résonance du circuit L2'C2 n'influencent que peu le fonctionnement de l'étiquette. Dans la description qui suit, on appellera antenne l'antenne résonante inductive 4.

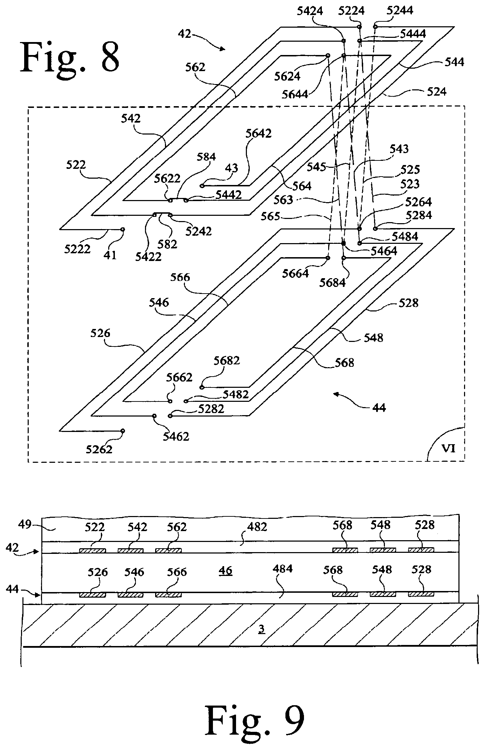

La figure 8 est une vue en perspective d'une antenne utilisable pour une radio-étiquette disposée sur le tube polymère

La figure 9 est une vue en coupe selon le plan V de la figure 8 ;

L'antenne 4 est formée de deux enroulements conducteurs plans 42 et 44 , identiques sur les deux faces d'un substrat isolant 46. Les enroulements sont à l'aplomb l'un de l'autre. Le substrat est, par exemple, une feuille isolante souple du type de celles habituellement utilisées pour les antennes planes. Les enroulements sont interrompus, de préférence à intervalles réguliers, pour former sur chaque face du substrat un ensemble de pistes conductrices identiques et superposées formant des tronçons de ligne micro-ruban, ces tronçons de ligne micro-ruban sont regroupés par deux de manière contigüe suivant le tracé des enroulements formant des sous-ensembles résonants.

Dans un même sous-ensemble résonant, les pistes conductrices des deux tronçons de ligne sont connectées au point de continuité géométrique suivant le tracé des enroulements selon deux modes de réalisation qui seront exposés par la suite. Les sous-ensembles résonants sont interconnectés entre eux suivant le tracé des enroulements entre une extrémité d'un premier sous-ensemble connectée à une borne 41 de l'antenne 4 et une extrémité d'un dernier sous-ensemble connectée à une borne 43 de l'antenne 4. Les connexions sont réalisées aux moyens de liaisons électriques sur une même face ou de liaisons électriques traversantes d'une face à l'autre (vias).

Selon le mode de réalisation de la figure 8, l'antenne est formée de trois sous-ensembles résonants 52, 54 et 56 de deux tronçons de lignes micro-ruban formant un ensemble de quatre pistes conductrices, chaque sous-ensemble comportant chacun deux premières pistes 522, 524, 542, 544, 562, 564 sur la première face du substrat en regard de deux secondes pistes 526, 528, 546, 548, 566, 568 sur la seconde face. Les premiers tronçons de ligne micro-ruban de chaque sous-ensemble résonant sont formés respectivement des couples de pistes 522 et 526, 542 et 546, 562 et 566, et les seconds tronçons sont formés respectivement des couples de pistes 524 et 528, 544 et 548, 564 et 568. Les deux pistes d'un même sous-ensemble résonant et d'une même face sont géométriquement l'une à la suite de l'autre dans l'enroulement 42 ou 44 correspondant.

Ainsi, une première borne 41 de l'antenne 4 est connectée à une première extrémité 5222 d'une piste 522 (par exemple et arbitrairement décrivant une demi-boucle) dont la seconde extrémité 5224 fait face sans être connectée à une seconde extrémité 5244 d'une piste 524 d'un premier sousensemble 52. La piste 524 poursuit l'enroulement 42 et est connectée (connexion 582), par sa première extrémité 5242, à la première extrémité 5422 d'une piste 542 du deuxième sous-ensemble 54. Cette structure est reproduite sur tout le premier enroulement 42. Ainsi, une première extrémité 5622 d'une piste 562 du troisième sous-ensemble 56 est électriquement connectée (connexion 584) à l'extrémité 5442 de la piste 544 du sousensemble 54. Une seconde extrémité 5624 de la piste 562 fait face (sans être connectée) à la seconde extrémité 5644 d'une piste 564 du sous-ensemble 56. Une première extrémité 5642 de la piste 564 termine l'enroulement par une connexion à une seconde borne 43 de l'antenne.

Côté seconde face, un tracé identique est reproduit avec les secondes pistes 526, 528, 546, 548, 566 et 568 des sous-ensembles 52, 54 et 56. Les premières bornes respectives 5262, 5462, 5662, 5282, 5482 et 5682 des pistes 526, 546, 566, 528, 248 et 568 sont toutefois laissées en l'air.

Dans le mode de réalisation de la figure 8, les secondes extrémités respectives 5224, 5424 et 5624 des pistes 522, 542 et 562 du premier enroulement 42 sont reliées (par exemple par des vias, respectivement 523, 543 et 563) aux secondes extrémités respectives 5284, 5484 et 5684 des pistes 528, 548 et 568 du sous-ensemble correspondant, formées dans le second enroulement 44. Les secondes extrémités respectives 5244, 5444 et 5644 des pistes 524, 544 et 564 du premier enroulement 42 sont reliées aux secondes extrémités respectives 5264, 5464 et 5664 des pistes 526, 546 et 566 du sous-ensemble correspondant, formées dans le second enroulement 44.

En variante, les connexions 582 et 584 sont sur l'enroulement 44 (connectant respectivement les extrémités 5462 et 5282 et les extrémités 5662 et 5482) et les secondes extrémités 5422, 4622, 4242 et 5442 des pistes 542, 524, 562 et 544 sont laissées en l'air. Dans cette variante, les bornes de l'antenne correspondent alors aux extrémités 5262 et 5682 des pistes 526 et 568.

Les deux faces sont recouvertes d'un verni isolant 482, 484 (figure 9), après avoir rapporté un circuit électronique (puce 22), avec interposition éventuelle d'un circuit d'adaptation 5. L'ensemble peut alors être rapporté (par exemple collé) sur la face externe du tuyau 3. Enfin, un film isolant 49 est rapporté sur l'ensemble.

On peut considérer que chaque sous-ensemble résonant 52, 54, 56 de pistes représente une connexion de type Moebius entre deux tronçons de ligne (cf. par exemple, l'article *"*Analysis of the Moebius Loop Magnetic Field Sensor" de P. H. Duncan, paru dans IEEE Transaction on Electromagnetic Compatibility, mai 1974 qui décrit un exemple de connexion de type Moebius avec deux tronçons de ligne coaxiale). Les différents sous-ensembles résonants sont alors placés géométriquement bout-à-bout dans une forme enroulée sur elle-même, la connexion électrique entre deux sous-ensembles voisins ne s'effectuant de préférence que dans un seul niveau conducteur. Il n'y a pas de continuité électrique via un même sous-ensemble entre les deux connexions électriques qui relient ce sousensemble aux sous-ensembles voisins ou aux bornes 41, 43 de l'antenne 4.

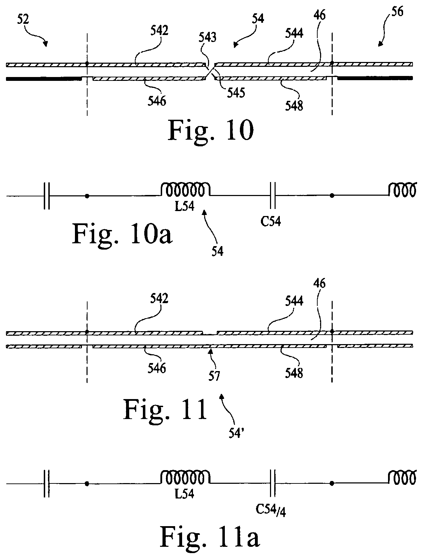

La figure 10 est une vue en coupe schématique d'un premier type de sous-ensemble d'une antenne propre à servir à la réalisation d'une radio-étiquette pour un tube polymère.

La figure 10A représente le schéma électrique équivalent du sous-ensemble de la figure 10 ;

Chaque première piste 542 ou 544 réalisée dans le premier niveau ou enroulement conducteur est reliée, par sa seconde extrémité et par la connexion 543, respectivement 545, à la seconde piste 548 ou 546 à l'aplomb de l'autre première piste dans l'autre niveau ou enroulement (connexion croisée). Les premières extrémités des pistes 542 et 544 définissent des bornes d'accès au sous-ensemble, respectivement connectées aux bornes d'accès des sous-ensembles 52 et 56 voisins. Les premières extrémités des pistes 546 et 548 sont laissées en l'air.

D'un point de vue électrique et comme l'illustre la figure 10A, Le schéma électrique équivalent d'un tel sous-ensemble revient à disposer électriquement, en série, une inductance de valeur L54 et un condensateur de valeur C54. l'inductance L54 représente l'inductance d'une seule piste conductrice équivalente à l'association des pistes conductrices du sous-ensemble 54 augmentée des mutuelles inductances entre cette piste équivalente et les pistes équivalentes associées de la même manière aux autres sous-ensembles. Le condensateur C54 représente la capacité formée par les pistes du sous-ensemble 54 entre les pistes 542 et 544 du premier niveau et les pistes 546 et 548 du second niveau (en tenant compte de la permittivité électrique du substrat isolant 46). Les différents circuits résonants sont connectés électriquement en série pour former l'antenne.

L'impédance du sous-ensemble résonant 54 est, dans ce mode de réalisation (en négligeant les pertes ohmiques dans les pistes conductrices et les pertes diélectriques), Z = jL54ω+1/jC54ω

La figure 11 est une vue en coupe d'un sous-ensemble selon un deuxième mode de réalisation.

Selon ce deuxième mode de réalisation, les secondes extrémités respectives des pistes 542 et 544 du premier enroulement sont laissées en l'air (non connectées) et les deuxièmes extrémités respectives des pistes 546 et 548 du second enroulement d'un même sous-ensemble sont interconnectées (connexion 57). Le reste n'est pas modifié par rapport au premier mode de réalisation.

D'un point de vue électrique et comme l'illustre la figure 11A, en supposant les pistes de même longueur dans les deux modes de réalisation, celui des figures 11 et 11A revient à une connexion en série d'un élément inductif de valeur L54 avec un élément capacitif de valeur C54/4, où L54 et C54 représentent les inductances et capacités du sous-ensemble 54 définies en relation avec la figure 10A.

L'impédance d'une paire de tronçons dans ce mode de réalisation est (en négligeant les pertes ohmiques dans les pistes conductrices et les pertes diélectriques) Z = jL54ω+1/j(C54/4)ω.

Ce mode de réalisation réduit la capacité équivalente mais évite les vias d'interconnexion dans chaque sous-ensemble.

Les deux modes de réalisation ci-dessus sont combinables.

La structure particulière d'antenne proposée permet, pour une fréquence d'accord donnée, de réaliser des sousensembles inductifs de faible valeur, donc associés à des capacités de forte valeurs (donc insensibles à la variation de capacités parasites sensibles au milieu humide).

On tire alors profit de l'épaisseur du diélectrique qui permet de réaliser une capacité non négligeable (supérieure à 150 pF).

Les longueurs seront adaptées à la fréquence de travail de l'antenne pour que chaque sous-ensemble respecte l'accord, c'est-à-dire que LCω² = 1 (L54C54ω² pour le sousensemble 54 suivant le mode de réalisation de la figure 10A et L54C54/4ω² pour le sous-ensemble 54 suivant le mode de réalisation de la figure 11A).

Il est possible d'utiliser une règle approchée pour dimensionner l'antenne. Pour cela, on considère l'inductance unitaire L0 égale à l'inductance d'un enroulement équivalent à l'association en parallèle de deux enroulements 42 et 44 divisée par le nombre de tours élevé au carré (le nombre de tours communs aux deux enroulements 42 et 44). On considère également la capacité globale C0 égale à la capacité totale comprise entre les pistes du premier niveau et les pistes du second niveau en tenant compte de la permittivité électrique du substrat isolant 46. Si l'on répartit de manière régulière n sous-ensembles résonants par tour d'enroulement, la règle approchée à respecter est L0C0(ω/n)² = 1 dans le premier mode de réalisation (figure 10) et L0(C0/4)(ω/n)² = 1 dans le second mode de réalisation (figure 11). Dans le cas où les sous-ensembles résonants occupent plus d'un tour, on tient compte du nombre de tours. Par exemple, pour deux tours, on prendra n = 1/2.

L'impédance équivalente de l'antenne 4 se déduit d'une mise en série des impédances Z de chaque sous-ensemble. La tension récupérée par l'antenne 4, lorsque celle-ci est placée dans un champ magnétique peut être calculée suivant la charge connectée à l'antenne en considérant qu'une source de tension est insérée en série avec son impédance équivalente. La valeur de cette source de tension correspond à la force électromotrice qui serait induite par le champ magnétique radiofréquence dans un enroulement équivalent à l'association en parallèle des deux enroulements 42 et 44.

On voit que l'on peut donc jouer en fonction de la distribution des sous-ensembles de l'un ou l'autre des modes de réalisation sur les longueurs des éléments conducteurs et les valeurs capacitives. Les valeurs des éléments capacitifs ne sont désormais plus négligeables et l'antenne est moins sensible aux perturbations dues à son environnement.

Former ainsi une antenne permet en outre de fractionner le circuit électrique et évite les éléments inductifs de trop grande longueur dans lequel le courant ne parviendrait pas à circuler de manière homogène (amplitude et phase). En effet, la connexion des paires entre-elles revient à connecter en série plusieurs circuits résonants de même fréquence de résonance.

Plus les inductances des circuits sont de valeurs faibles, moins les dérivations de courant par effets des capacités parasites seront importantes.

Les différents sous-ensembles n'ont pas nécessairement les mêmes longueurs, pourvu que chaque sous-ensemble respecte, le cas échéant avec l'interposition d'un condensateur, la relation de résonance.

Des condensateurs peuvent le cas échéant être intercalés entre différents sous-ensembles. Toutefois, pour ne pas nuire à l'épaisseur, on préférera jouer sur l'épaisseur du substrat 46.

Dans le mode de réalisation illustré par la figure 8, les épaisseurs mises en jeu sont préférentiellement des ordres de grandeur suivants :
substrat 46 : moins de 200 µm ;
couches conductrices de réalisation des enroulements 42 et 44 : moins de 50 µm, par exemple 35 µm ;
vernis 482 et 484 : de l'ordre de quelque dizaines de µm ;
film 49 : au plus quelques centaines de µm, de préférence, moins de 100 µm.

Ces épaisseurs peuvent varier mais on voit que le transpondeur réalisé est particulièrement fin (d'une épaisseur inférieure à 1 mm dans le mode de réalisation préféré) tout en étant insensible aux variations des capacités parasites dues à la présence du milieu environnant humide.

A titre d'exemple particulier de réalisation, une antenne telle qu'illustrée par la figure 5 et adaptée à un fonctionnement à une fréquence de 13,56 Mhz a été réalisé sur un substrat d'épaisseur de 100 µm ayant une capacité de 42,5 pF/cm2, sous la forme de cinq spires rectangulaires sur chaque face du substrat avec les caractéristiques suivantes (en négligeant les variations de longueur entre les sous-ensembles) :
taille des spires : environ 210 mm par 50 mm ;
largeur des pistes de cuivre rapportées sur le substrat (1,82 mm) ;
inductance L0 = 300 nH ;
capacité C0 = 1850 pF, soit C54 =185 pF dans le premier mode de réalisation et C54 = 370 pF (C54/4 = 93 pF) dans le second mode de réalisation

La réalisation pratique de l'antenne, donc du transpondeur est à la portée de l'homme du métier à partir des indications fonctionnelles données ci-dessus et en utilisant des techniques de fabrications usuelles dans la fabrication des circuits imprimés sur support flexible et fin. En particulier, la réalisation des interconnexions entre les niveaux dans le mode de réalisation des figures 5 et 7 peut requérir un décalage des extrémités respectives des pistes dans chacun des enroulements.

Les procédés de fabrication décrits précédemment permettent la réalisation d'un tube en polymère dans lequel les radio-étiquettes constituent une partie intégrante du tube.

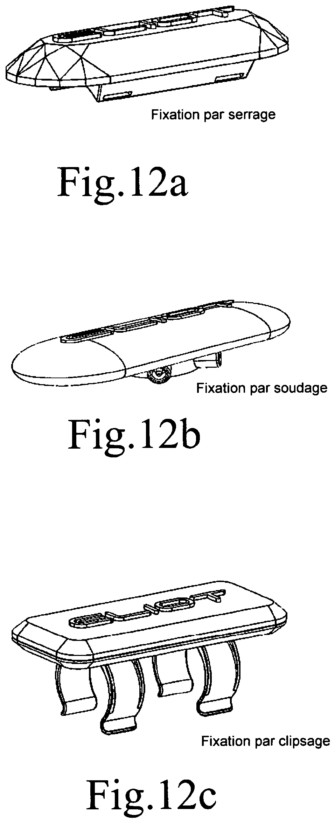

On peut envisager toutefois un autre mode de réalisation dans lequel la radio-étiquette est logée dans un boîtier qui peut être clipsée, vissé ou soudée comme cela est illustré dans les figures 12a à 12c.

### Avantages du tube polymère comportant la radio-étiquette:

Dans le domaine du gaz, où le polyéthylène est déjà largement présent pour des raisons de fiabilité, l'invention apportera la réponse d'une demande persistante des distributeurs de gaz : la localisation et la traçabilité depuis la surface et ce pour des raisons évidentes d'amélioration de la sécurité des réseaux enterrés.

L'invention apporte ainsi un avantage majeur aux canalisations en polymère enfouies sous terre qui deviennent, d'une part, et localisable et, d'autre part, véritablement communicante. Ces canalisations permettent d'échanger leurs identités, leurs caractéristiques et leur localisation depuis la surface. Leur traçabilité en est grandement favorisée.
- Détecter une canalisation, c'est ainsi sécuriser les opérateurs. Le problème de la location des canalisations polymères, insitu (sansplan), est une cause significative des explosions de gaz.
- La traçabilité permettra une mise à jour aisée des cartographies

Les informations complémentaires possibles rendant la canalisation intelligente.

## Revendications

1. Tube de polymère (100) destiné à la réalisation d'une canalisation enfouie dans un milieu sous terre, ledit tube comportant :
- une multitude de radio-étiquettes (111, 112, 113) de type RFID disposées à intervalles réguliers le long du tube ;
- optionnellement une couche de protection desdites radio-étiquettes;
- **caractérisé en ce que** chaque radio-étiquette comporte une antenne se décomposant en sous-ensembles résonants (52, 54, 56) ayant tous un élément capacitif et ayant tous la même fréquence de résonance, chaque sous-ensemble ayant une valeur d'inductance suffisamment faible pour que l'élément capacitif du sous-ensemble concerné ait une valeur suffisante à rendre négligeable des capacités parasites dépendant de la permittivité du milieu humide, même avec une forte permittivité.

2. Tube polymère selon la revendication 1 **caractérisé en ce que** lesdites radio-étiquettes RFID sont disposées sur un ruban (120) s'enroulant autour du tube

3. Tube polymère suivant la revendication 1 **caractérisée en ce que** lesdites radio-étiquettes sont disposées sur une feuille de polymère avant soudage par ses extrémités, sur le tube.

4. Tube polymère suivant la revendication 1 **caractérisée en ce que** lesdites radio-étiquettes sont disposées sur une bande continue collée sur une génératrice du tube.

5. Tube de polymère suivant la revendication 1 **caractérisée en ce qu'**il comporte des radio-étiquettes directement collées après éventuel pré-formage.

6. Tube polymère selon l'une des revendications 2 à 5 **caractérisé en ce qu'**il comporte en outre une couche protectrice de polymère destinée à protéger les radio-étiquettes lors du cintrage et du conditionnement du tube et des manipulations avant et lors de la pose.

7. Tube polymère selon l'une quelconque des revendications précédentes **caractérisé en ce qu'**il comporte des moyens de communication de l'identité, des caractéristiques de fabrication du tube, et de la localisation du tube.

8. Tube polymère selon la revendication 7 **caractérisé en ce qu'**il est destiné à la réalisation d'une canalisation de distribution de fluide, par exemple eau potable, ou de gaz, de protection de câble électrique ou de câble de fibre optique.

9. Procédé de fabrication d'un tube de polyéthylène destiné à la réalisation d'une canalisation enfouie dans un milieu sous terre ; ledit procédé comportant les étapes :
- mise à disposition (131) d'un tube polymère ;
- mise à disposition (132) d'un ruban comportant une série de radio-étiquettes ayant chacune un axe longitudinal suivant un angle α par rapport à l'axe dudit ruban ;
- enroulement (133) dudit ruban autour du tube polymère suivant un angle égal audit angle α de manière à faire coincider les axes longitudinaux des radio-étiquettes et l'axe du tube ;
- pose optionnelle (134) d'une couche de protection **caractérisé en ce que** chaque radio-étiquette comporte une antenne se décomposant en sous-ensembles résonants ayant tous un élément capacitif et ayant tous la même fréquence de résonance, chaque sous-ensemble ayant une valeur d'inductance suffisamment faible pour que l'élément capacitif du sous-ensemble concerné ait une valeur suffisante à rendre négligeable des capacités parasites dépendant de la permittivité du milieu humide, même avec une forte permittivité.

10. Procédé de fabrication d'un tube polymère destiné à la réalisation d'une canalisation enfouie dans un milieu sous terre, ledit procédé comportant les étapes :
- mise à disposition (141) d'un tube polymère ;
- mise à disposition (142) d'une feuille de polymère comportant à intervalle régulier des radio-étiquettes,
- recouvrement du tube par ladite feuille de polymère (143) de manière à en faire coincider les extrémités;
- soudage (144) des extrémités ;
- pose optionnelle (145) d'une couche de protection ; **caractérisé en ce que** chaque radio-étiquette comporte une antenne se décomposant en sous-ensembles résonants ayant tous un élément capacitif et ayant tous la même fréquence de résonance, chaque sous-ensemble ayant une valeur d'inductance suffisamment faible pour que l'élément capacitif du sous-ensemble concerné ait une valeur suffisante à rendre négligeable des capacités parasites dépendant de la permittivité du milieu humide, même avec une forte permittivité.

11. Procédé de fabrication d'un tube polymère destiné à la réalisation d'une canalisation enfouie dans un milieu sous terre, ledit procédé comportant les étapes :
- mise à disposition (151) d'un tube polymère ;
- mise à disposition (152) d'une bande continue comportant à intervalle régulier des radio-étiquettes ;
- collage de la bande (153) ;
- optionnellement recouvrement d'une couche de protection (154) **caractérisé en ce que** chaque radio-étiquette comporte une antenne se décomposant en sous-ensembles résonants ayant tous un élément capacitif et ayant tous la même fréquence de résonance, chaque sous-ensemble ayant une valeur d'inductance suffisamment faible pour que l'élément capacitif du sous-ensemble concerné ait une valeur suffisante à rendre négligeable des capacités parasites dépendant de la permittivité du milieu humide, même avec une forte permittivité.

12. Procédé de fabrication d'un tube polymère destiné à la réalisation d'une canalisation enfouie dans un milieu sous terre ; ledit procédé comportant les étapes :
- mise à disposition (161) d'un tube polymère
- mise à disposition d'au moins une radio-étiquette;
- préformage optionnel (162) de l'au moins une radio-étiquette de manière à ce que sa forme coincide avec le rayon de courbure du tube;
- collage (163) direct de l'au moins une radio-étiquette sur une génératrice du tube;
- optionnellement recouvrement d'une couche de protection (164); **caractérisé en ce que** chaque radio-étiquette comporte une antenne se décomposant en sous-ensembles résonants ayant tous un élément capacitif et ayant tous la même fréquence de résonance, chaque sous-ensemble ayant une valeur d'inductance suffisamment faible pour que l'élément capacitif du sous-ensemble concerné ait une valeur suffisante à rendre négligeable des capacités parasites dépendant de la permittivité du milieu humide, même avec une forte permittivité.

13. Procédé selon l'une des revendications 9 à 12 **caractérisé en ce que** ladite couche de protection est en polymère .

14. Procédé selon l'une des revendications 9 à 13 **caractérisé en ce que** lesdites radio-étiquettes comportent des moyens de communication de l'identité, des caractéristiques de fabrication du tube, et de la localisation du tube.

15. Tube de polymère selon la revendication 1 **caractérisée en ce que** lesdites radioétiquettes sont localisées dans un boitier autonome fixé sur le tube par clipsage, soudage ou serrage.

16. Boîtier autonome destiné à être fixé sur un tube de polymère destiné à la réalisation d'une canalisation enfouie dans un milieu humide sous terre, ledit boîtier comportant une radio-étiquette,
**caractérisé en ce que** la radio-étiquette comporte une antenne se décomposant en sous-ensembles résonants ayant tous un élément capacitif et ayant tous la même fréquence de résonance,
chaque sous -ensemble ayant une valeur d'inductance suffisamment faible pour que l'élément capacitif du sous-ensemble concerné ait
une valeur suffisante à rendre négligeable des capacités parasites dépendant de la permittivité du milieu humide, même avec une forte permittivité.

## Patentansprüche

1. Polymer-Rohr (100) zur Realisierung von unterirdisch verlegten Rohren, wobei das Rohr umfasst:
- eine Vielzahl von Funk-Etiketten (111, 112, 113) des RFID-Typs, die in regelmäßigen Abständen entlang des Rohres angeordnet sind;
- optional eine Schutzschicht der Funk-Etiketten;
**dadurch gekennzeichnet, dass** jedes Funk-Etikett eine Antenne umfasst, die in resonierende Unterbaugruppen (52, 54, 56) aufgeteilt ist, die jeweils ein kapazitives Element aufweisen und die gleiche Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

2. Polymer-Rohr nach Anspruch 1, **dadurch gekennzeichnet, dass** die RFID-Funk-Etiketten auf einem um das Rohr gewickelten Band (120) angeordnet sind.

3. Polymer-Rohr nach Anspruch 1, **dadurch gekennzeichnet, dass** sich die Funk-Etiketten auf einer Polymerfolie befinden, bevor deren Enden mit dem Rohr verschweißt werden.

4. Polymer-Rohr nach Anspruch 1, **dadurch gekennzeichnet, dass** die Funk-Etiketten auf einem durchgehenden Band angeordnet sind, das auf eine Mantellinie des Rohres geklebt ist.

5. Polymer-Rohr nach Anspruch 1, **dadurch gekennzeichnet, dass** es Funk-Etiketten umfasst, die direkt nach der Vorformung aufgeklebt werden.

6. Polymer-Rohr nach einem der Ansprüche 2 bis 5, **dadurch gekennzeichnet, dass** es ferner eine schützende Polymerschicht umfasst, die die Funk-Etiketten während des Biegens und Verpackens des Rohrs und der damit verbundenen Vorgänge vor und während der Installation schützt.

7. Polymer-Rohr nach einem der vorhergehenden Ansprüche, **dadurch gekennzeichnet, dass** es Kommunikationsmittel zur Übermittlung von Informationen bezüglich der Identität, des Herstellungsprozesses des Rohrs und der Lokalisierung des Rohrs umfasst.

8. Polymer-Rohr nach Anspruch 7, **dadurch gekennzeichnet, dass** es für die Realisierung einer Flüssigkeitsverteilungsleitung, zum Beispiel für Trinkwasser oder Gas, oder zum Schutz eines elektrischen Drahtes oder einer optischen Faser geeignet ist.

9. Verfahren zur Herstellung eines Rohrs aus Polymer, das für eine unterirdische Rohrleitung bestimmt ist, wobei das Verfahren die folgenden Schritte umfasst:
- Bereitstellen (131) eines Polymer-Rohrs;
- Bereitstellen (132) eines Bandes, das eine Reihe von RFID-Etiketten umfasst, die jeweils eine Längsachse in einem Winkel α relativ zur Achse des Bandes aufweisen;
- Wickeln (133) des Bandes um das Polymer-Rohr in einem Winkel, der gleich dem Winkel α ist, so dass die Längsachsen der RFID-Tags mit der Achse des Rohres ausgerichtet werden;
- optionales Abdecken (34) mit einer Schutzschicht.
**dadurch gekennzeichnet, dass** jedes Funk-Etikett eine Antenne umfasst, die in resonierende Unterbaugruppen (52, 54, 56) aufgeteilt ist, die jeweils ein kapazitives Element aufweisen und die gleiche Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

10. Verfahren zur Herstellung eines Rohres aus Polymer, das für eine unterirdische Rohrleitung bestimmt ist, wobei das Verfahren die folgenden Schritte umfasst:
- Bereitstellen (141) eines Polymer-Rohrs;
- Bereitstellen (142) einer Polymerfolie, die in regelmäßigen Abständen Funk-Etiketten-Tags enthält;
- Bedecken des Rohrs (143) mit der Polymerfolie, um die Enden auszurichten;
- Verschweißen (144) der Enden;
- optionales Abdecken (45) mit einer Schutzschicht;
**dadurch gekennzeichnet, dass** jedes Funk-Etikett eine Antenne umfasst, die in resonierende Unterbaugruppen (52, 54, 56) aufgeteilt ist, die jeweils ein kapazitives Element aufweisen und die gleiche Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

11. Verfahren zur Herstellung eines Rohres aus Polymer, das für eine unterirdische Rohrleitung bestimmt ist, wobei das Verfahren die folgenden Schritte umfasst:
- Bereitstellen (151) eines Polymer-Rohrs;
- Bereitstellen (152) eines kontinuierlichen Streifens, der in regelmäßigen Abständen RFID-Tags aufweist;
- Verkleben (153) des Streifens;
- optionales Abdecken (154) mit einer Schutzschicht;
**dadurch gekennzeichnet, dass** jedes Funk-Etikett eine Antenne umfasst, die in resonierende Unterbaugruppen (52, 54, 56) aufgeteilt ist, die jeweils ein kapazitives Element aufweisen und die gleiche Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

12. Verfahren zur Herstellung eines Rohres aus Polymer, das für eine unterirdische Rohrleitung bestimmt ist, wobei das Verfahren die folgenden Schritte umfasst:
- Bereitstellen (161) eines Polymer-Rohrs;
- Bereitstellen von mindestens einem Funk-Etikett;
- optionales Vorformen (162) mindestens des Funk-Etiketts, so dass seine Form mit dem Krümmungsradius des Rohrs übereinstimmt;
- direktes Aufkleben (163) des mindestens einen Funk-Etiketts auf eine Mantellinie des Rohres;
- optionales Abdecken (64) mit einer Schutzschicht;
**dadurch gekennzeichnet, dass** jedes Funk-Etikett eine Antenne umfasst, die in resonierende Unterbaugruppen (52, 54, 56) aufgeteilt ist, die jeweils ein kapazitives Element aufweisen und die gleiche Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

13. Verfahren nach einem der Ansprüche 9 bis 12, **dadurch gekennzeichnet, dass** die Schutzschicht aus Polymermaterial hergestellt ist.

14. Verfahren nach einem der Ansprüche 9 bis 13, **dadurch gekennzeichnet, dass** die Funk-Etiketten Mittel zur Kommunikation in Bezug auf die Identität, auf die Merkmale des Herstellungsprozesses und auf die Lokalisierungsdaten der Röhre umfassen.

15. Polymer-Rohr nach Anspruch 1, **dadurch gekennzeichnet, dass** die Funk-Etiketten in einer separaten Verpackung untergebracht sind, die auf das Rohr geklemmt, geschraubt oder geschweißt werden kann.

16. Autonomer Kasten zur Befestigung an einem Polymer-Rohr, das zur Realisierung einer unterirdischen Rohrleitung bestimmt ist, wobei der Kasten einen Funk-Etikett umfasst,
**dadurch gekennzeichnet, dass** das Funk-Etikett eine Antenne umfasst, die in resonierende Unterbaugruppen (52, 54, 56) aufgeteilt ist, die jeweils ein kapazitives Element aufweisen und dieselbe Resonanzfrequenz haben, wobei jede Unterbaugruppe einen ausreichend niedrigen Induktivitätswert aufweist, damit das kapazitive Element, das an der betreffenden Unterbaugruppe teilnimmt, einen Wert hat, der ausreicht, um Streukapazitäten in Abhängigkeit von der Permittivität der feuchten Umgebung vernachlässigbar zu machen, selbst bei einer hohen Permittivität.

## Claims

1. polymer tube (100) for the realization of pipe buried underground, said tube comprising:
- a plurality of radio tags (111, 112, 113) of RFID type arranged at regular intervals along the tube;
- optionally a protection layer of said radio tags;
**characterized in that** each radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.

2. Polymer tube according to claim 1 **characterized in that** said RFID radio-tags are situated on a ribbon (120) wrapped around the tube.

3. Polymer tube accoridng to claim 1 **characterized in that** said radio-tags are located on a sheet of polymer before welding its ends to the tube.

4. Polymer tube according to claim 1 **characterized in that** said radio-tags are located on a continuous tape glued on one generatrix of the tube.

5. Polymer tube according to claim 1 **characterized in that** it comprises radio-tags which are directly glued after pre-forming.

6. Polymer tube according to one of claims 2 to 5, **characterized in that** it further comprises a protective polymer layer protecting said radio-tags during bending and packaging of the tube and the operations involved before and during installation.

7. Polymer tube according to anyone of the preceding claims **characterized in that** it comprises communication means for communicating information relative to the identity, the manufacturing process of the tube and the localization of the tube.

8. Polymer tube according to claim 7 **characterized in that** it is adapted to the realization of a fluid distribution pipeline, for instance drinking water) or gas, or for protecting an electric wire or optical fiber.

9. Method of manufacturing a tube of polymer dedicated for an underground pipeline, said method comprising the steps:
- providing (131) a polymer tube;
- providing (132) a ribbon comprising a series of RFID tags, each having a longitudinal axis at an angle α relative to the axis of said ribbon;
- winding (133) said ribbon around the polymer tube at an angle equal to said angle α so as to align the longitudinal axes of the RFID tags with the axis of the tube;
- optionally covering (34) with a protective layer.
**characterized in that** each radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.

10. Method of manufacturing a tube of polymer dedicated for an underground pipeline, said method comprising the steps:
- providing (141) a polymer tube;
- providing (142) a polymer sheet comprising, at regular intervals, radio-tags;
- covering the tube (143) with said polymer sheet so as to align the ends;
- welding (144) the ends;
- optionally covering (45) with a layer of protection;
**characterized in that** each radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.

11. Method of manufacturing a tube of polymer dedicated for an underground pipeline, said method comprising the steps:
- providing (151) a polymer tube;
- providing (152) a continuous strip having, at regular intervals, RFID tags;
- bonding (153) of the strip;
- optionally covering (154) with a protective layer;
**characterized in that** each radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.

12. Method of manufacturing a tube of polymer dedicated for an underground pipeline, said method comprising the steps:
- providing (161) a polymer tube;
- providing at least one radio-tag;
- optional preforming (162) of at least said radio tag so that its shape coincides with the radius of curvature of the tube;
- direct gluing (163) of the at least one radio tag on a generatrix of the tube;
- optionally covering (64) with a protective layer;
**characterized in that** each radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.

13. Method according to anyone of claims 9 to 12, **characterized in that** said protective layer is made of polymer material.

14. Method according to anyone of claims 9 to 13, **characterized in that** said radio-tags comprises means for communicating relative to the identity, to the characteristics of the manufacturing process and to the localization data of the tube.

15. Polymer tube according to claim 1 **characterized in that** said radio-tags are located within a separate package which can be clamped, screwed or welded on the tube.

16. Autonomous box to be affixed on a polymer tube dedicated to the realization of an underground pipeline, said box comprising a radio-tag,
**characterized in that** the radio tag comprises an antenna which is split into resonating subassemblies (52, 54, 56), each having a capacitive element and having the same resonance frequency, each sub-assembly having a sufficiently low inductance value for the capacitive element taking part in the concerned subassembly to have a value sufficient to make stray capacitances depending on the moist environment permittivity negligible, even with a high permittivity.
